# EUROPÄISCHE PATENTSCHRIFT

(11) **EP 3 776 076 B1**
(45) Veröffentlichungstag und Bekanntmachung des Hinweises auf die Patenterteilung: **26.10.2022**
(21) Anmeldenummer: 19717814.8
(22) Anmeldetag: 09.04.2019
(51) Int. Cl.: G02F 1/355

(54) **HERSTELLUNG VON WELLENLEITERN AUS MATERIALIEN DER KTP-FAMILIE**
PRODUCTION OF WAVEGUIDES MADE OF MATERIALS FROM THE KTP FAMILY
FABRICATION DE GUIDES D'ONDE AVEC DES MATÉRIAUX DE LA FAMILLE DES KTP

(30) Priorität: 11.04.2018 DE 102018108636
(43) Veröffentlichungstag der Anmeldung: 17.02.2021
(73) Patentinhaber: Universität Paderborn, 33098 Paderborn (DE)
(72) Erfinder: PADBERG, Laura, 59929 Brilon (DE); EIGNER, Christof, 33098 Paderborn (DE); SANTANDREA, Matteo, 33098 Paderborn (DE); SILBERHORN, Christine, 33100 Paderborn (DE)
(74) Vertreter: Michalski Hüttermann & Partner Patentanwälte mbB
(86) Internationale Anmeldenummer: PCT/EP2019/059000
(87) Internationale Veröffentlichungsnummer: WO 2019/197429

(56) Entgegenhaltungen:
- EP-A1- 1 015 936
- EP-B1- 1 015 936
- JP-A- H06 214 277
- CHARLOTTE LILJESTRAND ET AL: "Periodic poling of Rb-doped KTiOPO_4 by coercive field engineering", OPTICS EXPRESS, Bd. 24, Nr. 13, 27. Juni 2016 (2016-06-27) , Seite 14682, XP055597458, US ISSN: 2161-2072, DOI: 10.1364/OE.24.014682
- VOLK MARTIN F ET AL: "Fabrication of ridge waveguides in potassium titanyl phosphate (KTP) for nonlinear frequency conversion", PROCEEDINGS OF SPIE; [PROCEEDINGS OF SPIE ISSN 0277-786X VOLUME 10524], SPIE, US, Bd. 10516, 15. Februar 2018 (2018-02-15), Seiten 105161A-105161A, XP060102230, DOI: 10.1117/12.2290008 ISBN: 978-1-5106-1533-5
- "Periodic electric field poling of KTiOPO4 using chemical patterning", APPLIED PHYSICS LETTERS, A I P PUBLISHING LLC, US, Bd. 69, Nr. 26, 23. Dezember 1996 (1996-12-23), Seiten 3999-4001, XP012016880, ISSN: 0003-6951, DOI: 10.1063/1.117850

## Beschreibung

Die Erfindung betrifft ein Verfahren zur Herstellung von Wellenleitern aus Materialien der KTP-Familie.

Periodisch gepolte Wellenleiter aus nichtlinearen Materialien werden für nichtlineare optische Effekte eingesetzt, zu denen unter anderem Frequenzverdoppelung (SHG), Summenfrequenzerzeugung (SFG) und Differenzfrequenzerzeugung (DFG) gehören. So findet nichtlineare Optik Anwendungen im Bau von optischen Schaltern und Bauelementen. Laser stehen nur bei begrenzten Wellenlängenbereichen zur Verfügung. Mittels Frequenzkonversion in nichtlinear optischen Bauelementen können neue Wellenlängen(bereiche) erreicht werden. Für eine effiziente Frequenzkonversion sind nichtlineare Materialien unerlässlich, die eine hohe Zerstörungsgrenze und einen weiten Transparenzbereich aufweisen. Materialien aus Kaliumtitanylphosphat (KTP) weisen diese Eigenschaften auf, so dass sie hervorragend für die Herstellung nichtlinearer Bauelemente, wie zum Beispiel periodisch gepolter Wellenleiter, geeignet sind. Die KTP-Familie umfasst alle Materialien MTiOXO₄ mit M={K,Rb,Cs} und X={P,As}.

Verfahren zur Herstellung periodisch gepolter Wellenleiter aus Kaliumtitanylphosphat (KTP) und anderen isomorphen Strukturen der KTP-Familie sind bekannt und können unter anderem eine Behandlung des Materials in einer Salzschmelze mit Rubidiumionen umfassen, um einen Ionenaustausch durchzuführen. Im Anschluss daran kann eine periodische Invertierung der Kristalldomänen durch Anlegen eines elektrischen Feldes erfolgen, wodurch der Wellenleiter periodisch gepolt wird. Ein solches Verfahren ist beispielsweise in der EP 1 015 936 B1 und in der WO 1990/004807 A1 beschrieben.

Die aus dem Stand der Technik bekannten Verfahrensschritte zur Herstellung periodisch gepolter Wellenleitern aus KTP beinhalten unter anderem also die Herstellung des Wellenleiters durch einen Ionenaustausch, wobei Kaliumionen des Materials gegen Rubidiumionen ausgetauscht werden, und eine darauffolgende periodische Polung des Wellenleiters. Eine Umkehr dieser beiden Verfahrensschritte des Ionenaustauschs und der periodischen Polung hat den Vorteil, dass eine bessere Polung durchgeführt werden kann, was zu einer Steigerung der Effizienz des Konversionsprozesses führt. Allerdings führt die Umkehr der Verfahrensschritte bei dem herkömmlichen Verfahren in der Regel zu einer Riffelung des Wellenleiters, da die unterschiedlich gepolten Bereiche des Materials unterschiedliche Diffusionskoeffizienten aufweisen, so dass im anschließenden Ionenaustauschprozess die Ionen unterschiedlich tief ins Material hineindiffundieren. Eine Riffelung des Wellenleiters bedeutet, dass der Wellenleiter entlang der Ausbreitungsrichtung des Lichtes unterschiedliche Eindringtiefen aufweist, so dass sich die Phasenanpassungsbedingungen für die Konversion ändern, wodurch die Effizienz des Konversionsprozesses beeinträchtigt wird und die Wellenleiter höhere Verluste aufweisen.

"CHARLOTTE LILJESTRAND ET AL, "Periodic poling of Rb-doped KTiOPO_4 by coercive field engineering", OPTICS EXPRESS, US, vol. 24, no. 13, Seite 14682" beschreibt ein Verfahren zur Herstellung eines Wellenleiters aus einem Material der KTP-Familie. Dabei werden verschiedene Prozesse offenbart und deren Auswirkungen auf den Wellenleiter in Bezug auf die Leitfähigkeit untersucht.

"OLK MARTIN F ET AL, "Fabrication of ridge waveguides in potassium titanyl phosphate (KTP) for nonlinear frequency conversion", PROCEEDINGS OF SPIE; PROCEEDINGS OF SPIE VOLUME 10524, vol. 10516" beschreibt einen Stoffmengenanteil von RbNO₃, KNO₃ und Ba(NO₃)₂ von 50 %, 47 % bzw. 3 % bei 330 °C, um Wellenleiter in KTP zu erzeugen.

Gemäß "Periodic electric field poling of KTiOPO4 using chemical patterning", APPLIED PHYSICS LETTERS, A I P PUBLISHING LLC, vol. 69, no. 26, Seiten 3999 - 4001" wird Rb-Ionenaustausch dazu verwendet, um eine Streifenmaske für das spätere periodische Pling zu erzeugen.

Davon ausgehend ist es die Aufgabe der Erfindung, bei Umkehr der bekannten Verfahrensschritte beim Ionenaustausch im Wesentlichen gleich tiefe Diffusionstiefen der Ionen zu erreichen, um einen möglichst riffelfreien, periodisch gepolten Wellenleiter herzustellen.

Diese Aufgabe wird durch den Gegenstand des Patentanspruchs 1 gelöst. Bevorzugte Weiterbildungen finden sich in den Unteransprüchen.

Erfindungsgemäß ist also ein Verfahren zur Herstellung von Wellenleitern aus einem Material der KTP-Familie mit folgenden Verfahrensschritten vorgesehen:
b) Behandlung des Materials derart, dass eine periodischen Polung des Materials erzielt wird,
c) Behandlung des Materials in einer Salzschmelze, die Rubidiumionen enthält,
dadurch gekennzeichnet, dass die Salzschmelze, die Rubidiumionen enthält, in Schritt c) den folgenden Randbedingungen genügt:
- der Stoffmengenanteil an Rubidiumnitrat (RbNO₃) in der Schmelze liegt zu Beginn der Behandlung im Bereich von 86-90 mol%,
- der Stoffmengenanteil an Kaliumnitrat (KNO₃) in der Schmelze liegt zu Beginn der Behandlung im Bereich von 10-12 mol%,
- der Stoffmengenanteil an Bariumnitrat (Ba(NO₃)₂) in der Schmelze liegt zu Beginn der Behandlung im Bereich von 0,5-1 mol%,
- die Temperatur der Schmelze liegt während der Behandlung im Bereich von 357-363 °C und
dass die Verfahrensschritte in der Reihenfolge b), c) durchgeführt werden.

Auf diese Weise kann erreicht werden, dass die Diffusionskoeffizienten der Rubidiumionen unabhängig von der periodischen Polung des Materials werden. Die Wahl der Randbedingungen der Salzschmelze, die Rubidiumionen enthält, führt dazu, dass die die Wellenleiter im Wesentlichen riffelfrei sind. Der Diffusionskoeffizient ist abhängig von der Temperatur und davon, welcher Stoff in welchen anderen Stoff hinein diffundiert und der Schmelzzusammensetzung. Die erfindungsgemäße Wahl der Austauschparameter führt im Ionenaustausch zu im Wesentlichen gleich großen Diffusionskoeffizienten für die unterschiedlich gepolten Bereiche des Materials.

Erfindungsgemäß wird damit ein Verfahren zur Herstellung von Wellenleitern bereitgestellt, welches dazu führt, dass die Wellenleiter im Wesentlichen riffelfrei sind. Das Verfahren sieht dabei zwei Verfahrensschritte b) und c) vor. Die Behandlung in Schritt b) führt zu einer periodischen Invertierung der Kristalldomänen. Durch diese Technik wird eine Quasi-Phasenanpassung (QPM) ermöglicht, wodurch eine Frequenzkonversion innerhalb des gesamten transparenten Bereichs ermöglicht wird.

Mit der anschließenden Behandlung in Schritt c) in einer Salzschmelze, die Rubidiumionen enthält wird ein Wellenleiter erzeugt. Hierbei findet ein Ionenaustausch statt, wobei Rubidiumionen aus der Schmelze die Gitterplätze der Kaliumionen im Material einnehmen. Dadurch wird der Brechungsindex erhöht, was eine Wellenleitung ermöglicht. Die unterschiedlich gepolten Bereiche des Materials weisen für den Ionenaustauschprozess unterschiedliche Diffusionskoeffizienten auf. Durch das Verfahren wird sichergestellt, dass die Ionen in den unterschiedlich gepolten Bereichen im Wesentlichen gleich tief ins Material hineindiffundieren und ein möglichst riffelfreier Wellenleiter erzeugt wird. Dadurch, dass die periodische Polung vor dem Prozess des Ionenaustauschs durchgeführt wird, kann eine verbesserte Polung erzielt werden, was zu einer Steigerung der Effizienz des Konversionsprozesses und zu Wellenleitern mit geringeren Verlusten führt.

Erfindungsgemäß sind die beiden Verfahrensschritte in der folgenden Reihenfolge durchzuführen: b) Behandlung des Materials derart, dass eine periodischen Polung des Materials erzielt wird, und c) Behandlung in einer Salzschmelze. Durch Einhalten der Reihenfolge b), c) lässt sich eine verbesserte Polung erzielen, was zu einer Steigerung der Effizienz des Konversionsprozesses und zu Wellenleitern mit geringeren Verlusten führt.

Gemäß einer bevorzugten Weiterbildung der Erfindung umfasst das Verfahren einen vorgelagerten Schritt a) der vorbereitenden Behandlung des Materials, um die Leitfähigkeit des Materials zu homogenisieren und/oder zu verkleinern. Die vorbereitende Behandlung hat zum Ziel die Leitfähigkeit des Materials zu verkleinern und/oder zu homogenisieren. Dadurch wird die Durchführung der periodischen Polung in Schritt b) vereinfacht, da eine erhöhte Leitfähigkeit es schwieriger gestaltet, eine ausreichende Spannung zwischen zwei auf einander gegenüberliegenden Seiten der Materialprobe angebrachten Elektroden aufrechtzuerhalten.

Vorzugsweise umfasst die Behandlung, mit dem Ziel die Leitfähigkeit des Materials zu homogenisieren und/oder zu verkleinern, eine Behandlung des Materials in einer KNO₃-Schmelze. Durch diesen Verfahrensschritt findet eine Besetzung der Leerstellen im Material durch Kaliumionen statt. Dadurch wird die Leitfähigkeit des Materials homogenisiert und/oder verringert. Dies führt zu einer Vereinfachung der später durchgeführten periodischen Polung, da eine erhöhte Leitfähigkeit es schwieriger gestaltet, eine ausreichende Spannung zwischen zwei Elektroden aufrechtzuerhalten. Eine bevorzugte Weiterbildung der Erfindung sieht eine Temperatur der KNO₃-Schmelze von 375°C für mindestens 24 Stunden vor.

Grundsätzlich kann eine periodische Polung durch unterschiedliche Verfahren erzeugt werden, welche dem Fachmann bekannt und Teil des Stands der Technik sind (siehe z.B. EP 1 015 936 B1). Gemäß einer bevorzugten Weiterbildung der Erfindung ist jedoch vorgesehen, dass der Schritt der Behandlung, die zu einer periodischen Polung führt, durch Einsatz eines gepulsten elektrischen Feldes zwischen zwei auf einander gegenüberliegenden Seiten der Materialprobe angebrachten Elektroden durchgeführt wird. Hierzu kommt vorzugsweise eine periodisch geformte Elektrode auf der einen Seite der Materialprobe zum Einsatz. Diese sorgt dafür, dass die Domänen im Material periodisch invertiert werden. Durch die periodische Polung wird die vorhandene Nichtlinearität des Materials moduliert, um so die Phasendifferenz zwischen den sich ausbreitenden Lichtstrahlen zu kompensieren und konstruktive Interferenz zu erreichen. Dies führt zu gesteigerten Effizienzen während des Konversionsprozesses.

Gemäß einer bevorzugten Weiterbildung der Erfindung ist vorgesehen, dass die Behandlung in einer Salzschmelze, die Rubidiumionen enthält, in Schritt c) nur auf einer Seite der Materialprobe angewendet wird und dies auf die Fläche bezogen in einer streifenförmigen Art und Weise erfolgt. Hierzu kommt vorzugsweise eine streifenförmig geformte Maske, vorzugsweise senkrecht zur Polungsstruktur, auf der einen Seite der Materialprobe zum Einsatz. Diese sorgt dafür, dass nur ausgewählte streifenförmige Bereiche des Materials mit der Salzschmelze in Kontakt kommen. Nur in diesen Bereichen kommt es zum Ionenaustausch mit der Schmelze. Die Diffusion der Rubidiumionen aus der Schmelze in das Material führt zu einer Erhöhung des Brechungsindex in den entsprechenden Bereichen, was eine Wellenleitung ermöglicht.

Nachfolgend wird die Erfindung unter Bezugnahme auf die Zeichnungen anhand eines bevorzugen Ausführungsbeispiels exemplarisch erläutert.

In der Zeichnung zeigen
- Fig. 1: einen herkömmlichen geriffelten, periodisch gepolten Wellenleiter,
- Fig. 2: einen riffelfreien, periodisch gepolten Wellenleiter gemäß einem bevorzugten Ausführungsbeispiel der Erfindung,
- Fig. 3: einen Aufbau für die Behandlung in den Schritten a und c gemäß einem bevorzugten Ausführungsbeispiel der Erfindung,
- Fig. 4: Elektroden, die für den Schritt der periodischen Polung verwendet werden, und
- Fig. 5: schematisch den Effekt des Schrittes c auf die Materialprobe.

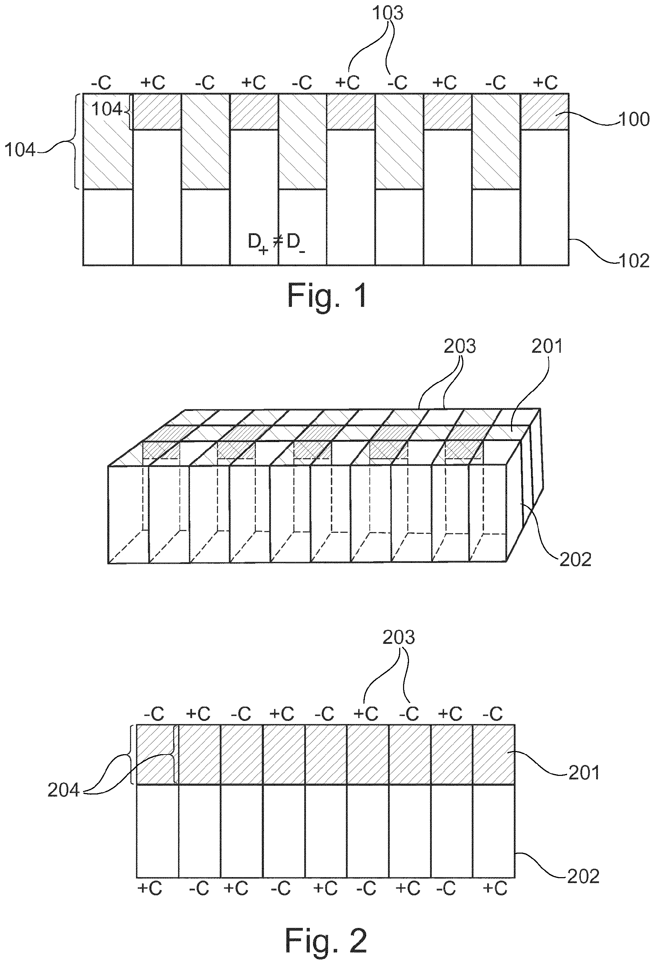

Fig. 1 zeigt einen Längsschnitt durch einen herkömmlichen geriffelten, periodisch gepolten Wellenleiter 100 in einer schematischen Darstellung. Eine Herstellung des Wellenleiters aus einer KTP-Materialprobe 102 durch Ionenaustausch nach periodischer Polung führt in der Regel zu einem geriffelten Wellenleiter 100. Die unterschiedlich gepolten (-c, +c) Bereiche 103 weisen unterschiedlich große Diffusionskoeffizienten auf (D+ ≠ D-). Dadurch diffundieren die Ionen beim Ionenaustausch unterschiedlich tief ins Material hinein, dargestellt mittels der Diffusionstiefe 104. Eine Riffelung des Wellenleiters 100 führt zu einer Beeinträchtigung der Effizienz des Konversionsprozesses.

Fig. 2 zeigt eine perspektivische Darstellung und einen Längsschnitt durch einen riffelfreien, periodisch gepolten Wellenleiter 201 aus einer KTP Materialprobe 202 bei Herstellung des Wellenleiters durch Ionenaustausch nach periodischer Polung in einer schematischen Darstellung, nach einem Verfahren gemäß einem bevorzugten Ausführungsbeispiel der Erfindung. Der Diffusionskoeffizient ist abhängig von der Temperatur und davon, welcher Stoff in welchen anderen Stoff hinein diffundiert. Die Wahl der Austauschparameter im Ionenaustausch führt zu im Wesentlichen gleich großen Diffusionskoeffizienten und somit zu im Wesentlichen gleich tiefen Diffusionstiefen 204 für die unterschiedlich gepolten Bereiche 203 des Materials 202.

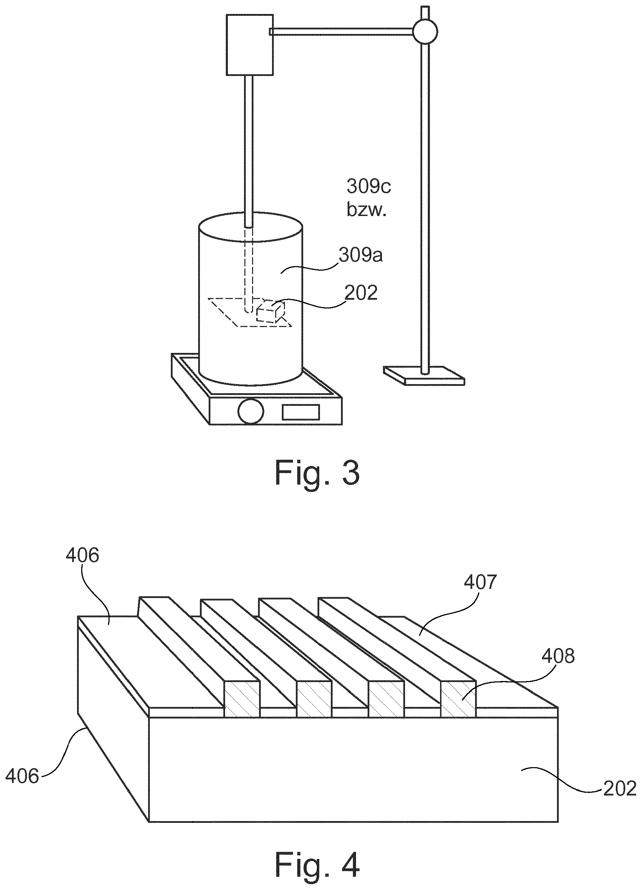

Das vorliegend beschriebene bevorzugte Ausführungsbeispiel des Verfahrens sieht drei Verfahrensschritte vor. Im ersten Schritt a) erfolgt eine vorbereitende Behandlung, mit dem Ziel die Leitfähigkeit des Materials zu homogenisieren und/oder zu verkleinern. Dabei findet eine Behandlung des Materials in einer KNO₃-Schmelze 309a statt. Fig. 3 zeigt schematisch den Aufbau für diesen Schritt. Die Temperatur der KNO₃-Schmelze 309a liegt bei dem vorliegenden Ausführungsbeispiel bei 375 °C. Die Verweildauer der Materialprobe 202 in der Schmelze beträgt dabei 24 h.

Im zweiten Schritt b) findet eine periodische Polung des Materials statt. Fig. 4 zeigt die Elektroden 406, die für den Schritt der periodischen Polung verwendete werden in einer schematischen Darstellung. Auf einer Seite der Materialprobe 202 befindet sich eine periodisch geformte Elektrode 407, welche nach bekannten Techniken gefertigt worden ist. An den Bereich der periodisch geformten Elektrode 407, die direkt auf dem Material aufliegt, grenzt jeweils ein Bereich aus isolierendem Material 408. Durch Erzeugung eines gepulsten elektrischen Feldes, lassen sich die Domänen invertieren, was zu einer periodischen Polung führt.

Der Aufbau für den dritten Schritt c) ist analog zum Schritt a) und ist in Fig. 3 schematisch gezeigt. Im dritten Schritt c) findet eine Behandlung des Materials 202 in einer Salzschmelze 309c, die Rubidiumionen enthält, statt. Dies führt zu einem Ionenaustausch zwischen den Rubidiumionen in der Schmelze und den Kaliumionen im Material, wodurch sich der Brechungsindex ändert.

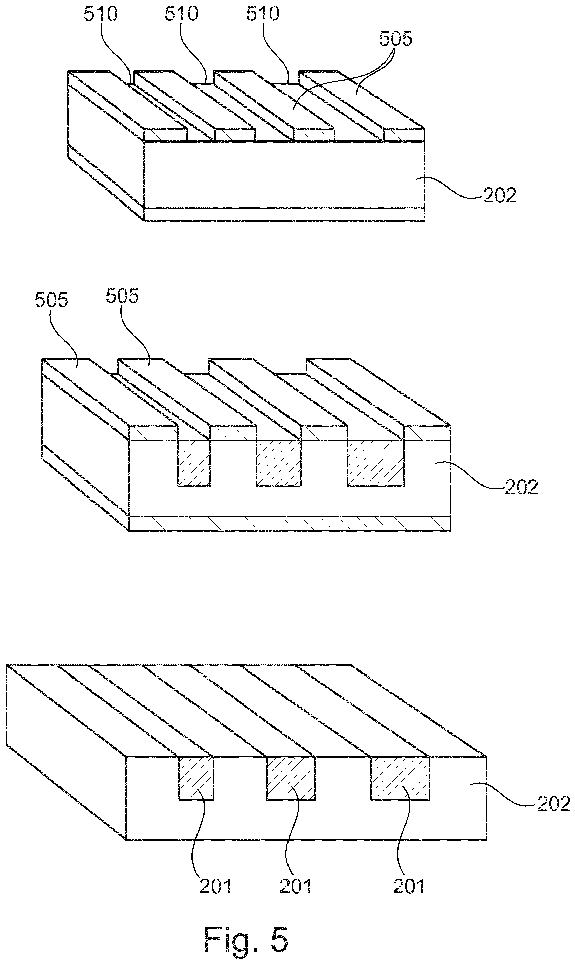

Fig. 5 zeigt den Effekt des dritten Schrittes c) auf die Materialprobe 202 in einer schematischen Darstellung. Die Wellenleiter 201 werden nur in bestimmten Bereichen 510 des Materials 202 hergestellt. Hierzu kommt auf einer Seite der Materialprobe 202 eine streifenförmig geformte Maske 505 zum Einsatz, welche nach bekannten Techniken gefertigt worden ist. Die Maske 505 sorgt dafür, dass nur ausgewählte streifenförmige Bereiche 510 des Materials 202 mit der Salzschmelze in Kontakt kommen. Die andere Seite wird vollständig von der Salzschmelze abgeschirmt. Nur in den Bereichen 510, die nicht von der Maske bedeckt sind, kommt es zum Ionenaustausch mit der Schmelze.

Die Schmelze 309c, die Rubidiumionen enthält, besteht gemäß dem vorliegend beschriebenen bevorzugten Ausführungsbeispiel der Erfindung aus einer Mischung aus Rubidiumnitrat, Kaliumnitrat und Bariumnitrat und setzt sich wie folgt zusammen:
- der Stoffmengenanteil an Rubidiumnitrat (RbNO₃) in der Schmelze liegt zu Beginn der Behandlung bei 88 mol%,
- der Stoffmengenanteil an Kaliumnitrat (KNO₃) in der Schmelze liegt zu Beginn der Behandlung bei 11 mol% und
- der Stoffmengenanteil an Bariumnitrat (Ba(NO₃)₂) in der Schmelze liegt zu Beginn der Behandlung beil mol%. Die Temperatur der Schmelze liegt während der Behandlung dabei bei 360 °C. Insgesamt werden damit im Wesentlichen riffelfreie, periodisch gepolte Wellenleiter 201 erzielt.

### Bezugszeichenliste

- 100: geriffelter, periodisch gepolter Wellenleiter
- 102: KTP Materialprobe
- 103: Bereiche der Polung
- 104: Diffusionstiefe
- 201: riffelfreier, periodisch gepolter Wellenleiter
- 202: KTP Materialprobe
- 203: Bereiche der Polung
- 204: Diffusionstiefe
- 309a: Salzschmelze KNO₃
- 309c: Salzschmelze au seiner Mischung aus RbNO₃, KNO₃ und Ba(NO₃)₂
- 406: Elektroden
- 407: periodisch geformte Elektrode
- 408: Bereich aus isolierendem Material
- 505: streifenförmig geformte Maske
- 510: streifenförmige Bereiche

## Patentansprüche

1. Verfahren zur Herstellung von Wellenleitern (201) aus einem Material (202) der KTP-Familie, mit folgenden Verfahrensschritten:
b) Behandlung des Materials (202) derart, dass eine periodischen Polung des Materials (202) erzielt wird,
c) Behandlung des Materials (202) in einer Salzschmelze (309c), die Rubidiumionen enthält,
**dadurch gekennzeichnet, dass** die Salzschmelze (309c), die Rubidiumionen enthält in Schritt c) den folgenden Randbedingungen genügt:
- der Stoffmengenanteil an Rubidiumnitrat (RbNO₃) in der Schmelze liegt zu Beginn der Behandlung im Bereich von 86-90 mol%,
- der Stoffmengenanteil an Kaliumnitrat (KNO₃) in der Schmelze liegt zu Beginn der Behandlung im Bereich von 10-12 mol%,
- der Stoffmengenanteil an Bariumnitrat (Ba(NO₃)₂) in der Schmelze liegt zu Beginn der Behandlung im Bereich von 0,5-1 mol%,
- die Temperatur der Schmelze liegt während der Behandlung im Bereich von 357-363 °C und
dass die Verfahrensschritte in der Reihenfolge b), c) durchgeführt werden.

2. Verfahren nach Anspruch 1 **dadurch gekennzeichnet, dass** das Verfahren einen vorgelagerten Schritt a) vorbereitende Behandlung des Materials (202), um die Leitfähigkeit des Materials (202) zu homogenisieren und/oder zu verringern, umfasst.

3. Verfahren nach Anspruch 2 **dadurch gekennzeichnet, dass** der Schritt der vorbereitenden Behandlung, mit dem Ziel die Leitfähigkeit des Materials (202) zu homogenisieren und/oder zu verkleinern, eine Behandlung des Materials (202) in einer KNO₃-Schmelze (309a) umfasst.

4. Verfahren nach einem der vorherigen Ansprüche **dadurch gekennzeichnet, dass** der Schritt der Behandlung, die zu einer periodischen Polung führt, eine Verwendung eines gepulsten elektrischen Feldes zwischen zwei Elektroden (406), welche auf sich gegenüberliegenden Seiten der Materialprobe (202) angebracht sind, umfasst.

5. Verfahren nach Anspruch 4 **dadurch gekennzeichnet, dass** dabei eine periodisch geformte Elektrode (407) auf einer Seite der Materialprobe (202) verwendet wird.

6. Verfahren nach einem der vorherigen Ansprüche **dadurch gekennzeichnet, dass** die Behandlung in einer Salzschmelze (309c), die Rubidiumionen enthält, in Schritt c) nur auf eine Seite der Materialprobe (202) angewendet wird und dies auf die Fläche bezogen in einer streifenförmigen Art und Weise erfolgt.

7. Verfahren nach Anspruch 6 **dadurch gekennzeichnet, dass** dabei eine streifenförmig geformte Maske (505) auf einer Seite der Materialprobe (202) verwendet wird.

## Claims

1. Method for producing waveguides (201) from a material (202) from the KTP family, comprising the following method steps:
b) treating the material (202) such that periodic polarization of the material (202) is achieved,
c) treating the material (202) in a molten salt bath (309c) containing rubidium ions,
**characterized in that** the molten salt bath (309c) containing rubidium ions in step c) satisfies the following boundary conditions:
- at the start of the treatment, the mole fraction of rubidium nitrate (RbNO₃) in the molten bath is in the range of from 86-90 mol.%,
- at the start of the treatment, the mole fraction of potassium nitrate (KNO₃) in the molten bath is in the range of from 10-12 mol.%,
- at the start of the treatment, the mole fraction of barium nitrate (Ba(NO₃)₂) in the molten bath is in the range of from 0.5-1 mol.%,
- during the treatment, the temperature of the molten bath is in the range of from 357-363°C, and
**in that** the method steps are carried out in the order b), c).

2. Method according to claim 1, **characterized in that** the method comprises a preceding step a) of preparatory treatment of the material (202) in order to homogenize and/or reduce the conductivity of the material (202).

3. Method according to claim 2, **characterized in that** the step of preparatory treatment with the aim of homogenizing and/or reducing the conductivity of the material (202) comprises treatment of the material (202) in a molten KNO₃ bath (309a).

4. Method according to any of the preceding claims, **characterized in that** the treatment step which results in periodic polarization comprises the use of a pulsed electrical field between two electrodes (406) attached to opposite sides of the material sample (202).

5. Method according to claim 4, **characterized in that** a periodically shaped electrode (407) is used on one side of the material sample (202) in this case.

6. Method according to any of the preceding claims, **characterized in that** the treatment in a molten salt bath (309c) containing rubidium ions in step c) is only applied to one side of the material sample (202) and takes place in a strip-shaped manner in relation to the surface.

7. Method according to claim 6, **characterized in that** a strip-shaped mask (505) is used on one side of the material sample (202) in this case.

## Revendications

1. Procédé de fabrication de guides d'ondes (201) à base d'un matériau (202) de la famille du titanyl phosphate de potassium KPT, avec les étapes de procédé suivantes :
b) traitement du matériau (202) de telle manière qu'une polarisation périodique du matériau (202) soit réalisée,
c) traitement du matériau (202) dans un sel fondu (309c) qui contient des ions de rubidium,
**caractérisé en ce que** le sel fondu (309c) qui contient des ions de rubidium dans l'étape c) satisfait aux conditions limites suivantes :
- la fraction molaire en nitrate de rubidium (RbNO₃) dans le produit fondu se situe au début du traitement dans la plage de 86 à 90 % en moles,
- la fraction molaire en nitrate de potassium (KNO₃) dans le produit fondu se situe au début du traitement dans la plage de 10 à 12 % en moles,
- la fraction molaire en nitrate de baryum (Ba(NO₃)₂) dans le produit fondu se situe au début du traitement dans la plage de 0,5 à 1 % en moles,
- la température du produit fondu pendant le traitement se situe à 357 - 363 °C, et
les étapes de procédé sont exécutées dans l'ordre b), c).

2. Procédé selon la revendication 1, **caractérisé en ce que** le procédé comprend une étape a) placée antérieurement de traitement préparatoire du matériau (202) afin d'homogénéiser et/ou de diminuer la conductibilité du matériau (202).

3. Procédé selon la revendication 2, **caractérisé en ce que** l'étape du traitement préparatoire ayant l'objectif d'homogénéiser et/ou de diminuer la conductibilité du matériau (202) comprend un traitement du matériau (202) dans du KNO₃ fondu (309a).

4. Procédé selon l'une des revendications précédentes, **caractérisé en ce que** l'étape du traitement qui conduit à une polarisation périodique comprend l'emploi d'un champ électrique pulsé entre deux électrodes (406), lesquelles sont rapportées au niveau de côtés opposés de l'échantillon de matériau (202).

5. Procédé selon la revendication 4, **caractérisé en ce que**, ce faisant, une électrode (407) de forme périodique est employée sur un côté de l'échantillon de matériau (202).

6. Procédé selon l'une des revendications précédentes, **caractérisé en ce que** le traitement dans un sel fondu (309c) qui contient des ions de rubidium est employé dans l'étape c) uniquement sur un côté de l'échantillon de matériau (202) et que ceci a lieu sur la surface dans un mode en forme de rayures.

7. Procédé selon la revendication 6, **caractérisé en ce que**, ce faisant, on emploie un masque (505) conçu en forme de rayures sur un côté de l'échantillon de matériau (202).
